# EUROPEAN PATENT SPECIFICATION

(11) **EP 3 923 382 B1**
(45) Date of publication and mention of the grant of the patent: **07.01.2026**
(21) Application number: 19926197.5
(22) Date of filing: 22.06.2019
(51) Int. Cl.: H01M 4/133, H01M 4/134, H01M 10/0525, H01M 10/42, H01M 10/058, H01M 10/44, H01M 4/04, H01M 4/131, H01M 4/1391, H01M 4/1393, H01M 4/1395, H01M 4/525, H01M 4/587, H01M 4/38, H01M 10/04, H01M 50/46

(54) **LITHIUM ION BATTERY WITH HIGH CAPACITY RETENTION RATE, AND PREPARATION METHOD AND CHARGING AND DISCHARGING METHODS THEREFOR**
LITHIUMIONENBATTERIE MIT HOCHKAPAZITIVER RETENTIONSRATE SOWIE HERSTELLUNGSVERFAHREN UND LADE- UND ENTLADEVERFAHREN DAFÜR
BATTERIE LITHIUM-ION À TAUX DE RÉTENTION DE CAPACITÉ ÉLEVÉ, ET PROCÉDÉ DE PRÉPARATION ET PROCÉDÉS DE CHARGE ET DE DÉCHARGE ASSOCIÉS

(30) Priority: 25.04.2019 CN 201910338139
(43) Date of publication of application: 15.12.2021
(73) Proprietor: Zhejiang Funlithium New Energy Tech Co., Ltd., Ningbo, Zhjiang 315040 (CN)
(72) Inventor: XU, Xiaoxiong, Ningbo, Zhejiang 315040 (CN); CUI, Yanming, Ningbo, Zhejiang 315040 (CN); HUANG, Yuanqiao, Ningbo, Zhejiang 315040 (CN); GE, Zhimin, Ningbo, Zhejiang 315040 (CN)
(74) Representative: Santarelli
(86) International application number: PCT/CN2019/092435
(87) International publication number: WO 2020/215472

(56) References cited:
- CN-A- 106 257 714
- CN-A- 107 978 790
- CN-A- 107 978 790
- CN-A- 108 539 124
- JP-A- 2015 111 656
- JP-A- 2017 152 139
- US-A1- 2016 064 779

## Description

### Technical Field

The present invention relates to the technical field of lithium ion batteries, in particular to a lithium ion battery with a high capacity retention rate, and a preparation method and charging and discharging methods therefor.

### Background Art

With the introduction of the national new energy strategy policy, new energy electric vehicles have been developed rapidly. With regard to new energy vehicles, the personal experience of many buyers is that when they started driving, new energy vehicles are still good in terms of performance or cruising ability, but as the usage time becomes longer, many users will feel that the cruising abilities of new energy vehicles are significantly reduced.

As the power source of 3C products or the power of electric vehicles, in addition to energy density, another important indicator of lithium ion batteries is the capacity retention rate, which directly affects the feeling of using 3C products and the cruising abilities of electric vehicles. However, when a lithium ion battery is cycling, the negative SEI and the positive CEI are constantly destroyed and grown, and the active lithium in the positive electrode is constantly consumed, resulting in a continuous decrease of the available capacity of the battery, which directly leads to a significant decrease in the cruising ability of a battery.

With the increasing requirements on the specific energy of a power battery, the traditional graphite negative electrode material can no longer meet the requirements. In the development of a 300 Wh/kg high specific energy battery, the high nickel ternary + silicon carbon negative electrode material will become the mainstream material system of a power battery. The theoretical specific capacity of a Si material is as high as 4200 m Ah/g, but the volume expansion is as high as 300% during lithium intercalation, which will lead to cracks in a SEI film formed on the surface of Si particles or other Si-based negative electrodes, resulting in a continuous consumption of the electrolyte and active lithium in the positive electrode.
At present, in order to improve the first effect of silicon-based high-capacity negative electrode materials, a large number of lithium supplement technologies have emerged, but they all have the following shortcomings: (1) the pre-lithiation degree is uncontrollable: Li dendrites will be formed if the pre-lithiation degree is too high or lithium metal is used for pre-lithiation; it is difficult to control the matching with the positive electrode material; the decomposition products of some positive or negative electrode pre-lithiation reagents may contain other inactive residual substances besides Li, thus reducing the energy density of the battery; (2) the pre-lithiation process is complex: the pre-lithiation process is less compatible with existing lithium battery production processes, some of which involve pre-assembly and disassembly of batteries, which makes the battery preparation process overly complex, and is basically unable to achieve automation of pre-lithiation, resulting in a high cost of pre-lithiation; although there are related patents, the pre-lithiation process has not yet been applied in actual production; (3) poor uniformity of lithium supplementation: Li powder is sprayed on the negative electrode surface by means of electrostatic control. Since Li powder is relatively light and has a large specific surface area, resulting in the problems of how to control accurate lithium supplementation and unable to achieve uniform lithium supplementation. And the high activity of the lithium powder and environmental control are also important issues; and (4) easy deposition of dendrites; the negative electrode surface is covered with a layer of supplemented lithium with Li metal. If the lithium is excessive, there is a risk that lithium dendrites will be deposited on the surface of the lithium foil during subsequent charging, so ultra-thin lithium is needed. However, because lithium itself is relatively soft, high production requirements and high cost will be proposed if pressed into a very thin thickness. Moreover, the existing lithium supplement technology is mainly used to pre-compensate the active lithium lost in the first cycle of charge and discharge, which is only effective for the first cycle efficiency of lithium ion batteries, and has no obvious positive effect on the capacity attenuation in the later long cycle. Once the capacity attenuation of lithium ion batteries occurs after the first cycle, the conventional lithium ion battery technology is irreversible and the batteries cannot be repaired until being scrapped.
The Japanese patent application JP2015111656A relates to a lithium-ion battery system including an arrangement of four electrodes, wherein the third electrode is a lithium foil electrode used for pre-doping the anode or cathode with lithium ions, and the fourth electrode is insulated and connected via an external terminal for monitoring potential shifts in the positive and negative electrodes. The Chinese patent application CN 107978790A discloses a lithium supplement method for increasing the cycle lifetime of a battery.

### Summary of the Invention

The objective of the present invention is to provide a lithium ion battery with a high capacity retention rate, and a preparation method and charging and discharging methods thereof. The lithium ion battery has repairable capability to a certain extent, so as to improve the long-cycle capacity retention rate of current lithium ion batteries, especially solid-liquid lithium ion batteries, and improve the cruising ability retention rate of electric vehicles, which is of great significance for reducing battery replacement frequency, reducing the usage cost of electric vehicles and promoting the popularization and application of electric vehicles.

The first objective of the present invention is achieved by the following technical solution:
a lithium ion battery with a high capacity retention rate, which comprises a positive electrode plate, a negative electrode plate, separators arranged between the positive electrode plate and the negative electrode plate at intervals, and an electrolyte, and further comprises a third electrode and a fourth electrode, which are provided between the positive electrode plate and the negative electrode plate, wherein the third electrode and the fourth electrode are separated by means of a single-layer separator, a metal lithium electrode being used as the third electrode, and an activated carbon electrode being used as the fourth electrode.

According to the above technical solution, the capacity retention rate of the lithium ion battery of the present application is remarkably improved by using four electrodes; in particular, the third electrode and the fourth electrode cooperate with each other to temporarily store active lithium, realizing quantitative timing and controllable restoration and regeneration of supplemented active lithium, and maintaining a good dynamic performance, such that the lithium ion battery has repairable ability to a certain extent, so as to realize the controllable and steady improvement of the long-cycle capacity retention rate of current lithium ion batteries, especially solid-liquid lithium ion batteries, and improve the cruising ability retention rate of electric vehicles. In addition, there is a natural potential difference between the fourth electrode and the negative electrode plate, which realizes the preferential removal of active lithium in the negative electrode of the lithium ion battery, and effectively avoids the problems of short circuit, failure and even safety of the lithium ion battery caused by the precipitation of lithium in a metal form due to the excessive active lithium in the negative electrode of the fourth electrode during subsequent charging.

The present invention is further provided as follows: the third electrode is preferably a lithium foil or a lithium alloy foil with a thickness of 100-500 µm.

According to the above technical solution, the thickness of the third electrode can be selected according to actual needs and cost. In addition, the thickness of the selected lithium foil or lithium alloy foil does not need to be too thin, which reduces the processing cost.

The present invention is further provided as follows: the lithium foil or lithium alloy foil is roughened by means of pre-rolling, and the pre-rolling is preformed by using a stainless steel roller with grid raised points, wherein the rolling pressure is 0.1-10 MPa.

According to the above technical solution, the metal lithium electrode after the roughening treatment has a microporous structure on the surface, which is conducive to electrolyte infiltration and shortens the repair and regeneration time.

The present invention is further provided as follows: the fourth electrode comprises the following components in percentage by weight: 35-55% of activated carbon, 40-55% of hard carbon, 5% of a binder, 4% of a conductive agent, 1% of a pore former, combined with a porous current collector.

According to the above technical solution, activated carbon, hard carbon, and the porous current collector can be used as the fourth electrode, which can realize the temporary storage of active lithium, and the repair and regeneration by using active lithium, thereby maintaining the dynamic performance of the lithium ion battery.

The present invention is further provided as follows: the number of layers of the third electrode and the fourth electrode is 1 to 4.

According to the above technical solution, the number of layers can be flexibly selected, and manufacturers can flexibly adjust the number of layers of the third electrode and the fourth electrode according to needs, in order to prepare lithium ion batteries with a balance of energy density and capacity retention rate under their own conditions.

The second objective of the present invention is achieved by the following technical solution:
a preparation method of the lithium ion battery with a high capacity retention rate, wherein the lithium ion battery is prepared by the following steps:
(1) the positive electrode plate, the negative electrode plate, and the separator are wound or laminated according to a conventional process to form a battery cell structure;
(2) the third electrode and the fourth electrode are wound or laminated inside or outside the above-mentioned battery cell structure, and the third electrode and the fourth electrode are separated by a single-layer separator; and
(3) the electrolyte is injected according to conventional subsequent steps, and sealed to form the lithium ion battery.

According to the above technical solution, the preparation method of the present application is slightly improved on the basis of the original lithium ion battery production process, which helps to realize batch automated production. The preparation method are well adaptable, and can be applied to both the winding process and the lamination process.

The third objective of the present invention is achieved by the following technical solution:
charging and discharging methods of the lithium ion battery, which comprise the following steps:
   (1) when the number of turns is n, the negative and positive electrodes of the lithium ion battery are only charged; after the charging is finished, the third electrode and the fourth electrode are discharged with controlled current;
   (2) after standing for 1 hour, the fourth electrode is connected in parallel with the negative electrode of the lithium ion battery to perform the discharge with the positive electrode of the lithium-ion battery;
   (3) the normal charge and discharge between the positive and negative electrodes of the lithium ion battery occur at the (n+1) th and subsequent turns;
   (4) the normal charge and discharge are continued until the next fixed number of turns or conditional number of turns, and steps (1) to (4) are repeated; and
   (5) when the number of cycles reaches the specified number of turns, the charging and discharging methods are finished;
wherein the number of turns n may be a fixed number of turns or a conditional number of turns, and the fixed number of turns is preferably 300, 500, 700, 1000, 1300, 1500, 1800, 2000, 2500, 3000, 3500, 4000, 4500, or 5000.

According to the above technical solution, the metal lithium electrode only has a discharge process, which has low requirements on the environment, and since there is no charging process, no lithium dendrites are generated, which solves the safety problems in the use of conventional lithium metal; accurate control can be realized, which can not only realize regular repair according to the fixed number of turns, but also regeneration as needed according to the attenuation of actual capacity; and the uniform dispersion of active lithium in the lithium ion battery can be further promoted after standing for an appropriate period of time.

The present invention is further provided as follows: in the step (1), the third electrode and the fourth electrode are discharged, preferably at a discharge current of 0.05 A-2 A and preferably under a discharge cutoff condition, wherein the preferred discharge cut-off voltage is 2.3-2.9 V, and the discharge cut-off time is 1 min-30 min.

According to the above technical solution, the discharge time, discharge cut-off voltage and discharge current of the third electrode and the fourth electrode are controlled, so as to realize accurate and quantitative supplement of active lithium.

The present invention is further provided as follows: in the step (2), the fourth electrode is connected in parallel with the negative electrode of the lithium ion battery to perform the discharge with the positive electrode of the lithium-ion battery, wherein the discharge cut-off voltage is 2.3-2.9 V.

According to the above technical solution, the accurate and quantitative supplement of active lithium can be realized.

In summary, the beneficial technical effects of the present invention are as follows:
1. The synergy of the third electrode and the fourth electrode significantly improves the capacity retention rate of the lithium ion battery.
2. Activated carbon is used as the fourth electrode and provides efficient temporary storage of active lithium, and a porous current collector electrode, which maintains good kinetic performance during the repairing, regenerating and supplementing active lithium.
3. There is a natural potential difference between the fourth electrode and the negative electrode plate, which realizes the preferential removal of active lithium in the negative electrode of the lithium ion battery, and effectively avoids the precipitation of lithium in a metal form due to the excessive active lithium in the negative electrode of the fourth electrode during subsequent charging.
4. The original production process of the lithium ion battery is basically not changed, and only a slight improvement is required in the original production process, which helps to realize batch automated production.
5. The preparation method are well adaptable, and can be applied to both the winding process and the lamination process.
6. The metal lithium electrode only has a discharge process, which has low requirements on the environment, and since there is no charging process, no lithium dendrites are generated, which solves the safety problems in the use of conventional lithium metal.
7. The thickness of the third electrode can be selected according to actual needs and cost, and the thickness does not need to be too thin, which reduces the processing cost.
8. After the roughening treatment of the metal lithium electrode, the third electrode has a microporous structure on the surface, which is conducive to electrolyte infiltration and shortens the repair and regeneration time.
9. Accurate control can be realized: that is, regular repair can be performed according to the fixed number of turns.
10. The discharge time, discharge cut-off voltage and current of the third electrode and the fourth electrode, and the cut-off voltage at which the fourth electrode is connected in parallel with the negative electrode of the lithium ion battery to perform the regular discharge with the positive electrode of the lithium-ion battery are controlled, so as to realize accurate and quantitative supplement of active lithium;
11. The uniform dispersion of active lithium in the battery can be further promoted after standing for an appropriate period of time;
12. Manufacturers can adjust the shapes, thicknesses, numbers of layers, positions, specific formula compositions and numbers of working cycles of the third electrode and the fourth electrode according to the characteristics and production processes of the positive and negative electrode materials of the lithium ion batteries themselves, so as to obtain lithium ion batteries which adapt to their own conditions and have a balance of energy density and capacity retention rate.

### Detailed Description of Embodiments

The present invention is further described in detail below in combination with examples.

### Example I:

A lithium ion battery with a high capacity retention rate, the preparation method and charging and discharging methods thereof comprise the following steps:
(1) Providing a graphite negative electrode, a NCM111 positive electrode, and a separator of the lithium ion battery, and laminating them according to a conventional process.
(2) Providing a lithium foil with a thickness of 100 µm, which is roughened by using a stainless steel roller with a roughness of 100 meshes at a rolling pressure of 10 MPa as a third electrode; wet mixing 50% of activated carbon, 40% of hard carbon, 5% of P VDF, 4% of acetylene black, 1% of Li₂SO₄ and foam nickel, rolling and drying same to obtain a fourth electrode, laminating one layer of the third electrode and one layer of the fourth electrode on both sides of the above battery cell, respectively, with a separator therebetween for separation. The negative electrode tabs of the lithium ion battery are ultrasonically spot-welded together and led out from the outer tab, the positive electrode tabs of the lithium ion battery are ultrasonically spot-welded together and led out from the outer tab, two lithium metal electrodes on both sides are calendered and bonded, and led out from the outer tab, and two fourth electrodes are ultrasonically spot-welded together and led out from the outer tab to form a lithium ion battery battery cell with four electrodes. After electrolyte injection, and pre-sealing, top sealing, side sealing and secondary sealing with aluminum plastic films, a lithium ion battery battery cell 10 Ah is formed.
(3) After the conventional formation, 1C charge and discharge cycle test is started on the battery with a voltage from 4.2 V-3 V, when the number of turns is 300, the lithium ion battery is charged between the negative and positive electrodes only and discharged at 0.05 A for 10 min between the third and fourth electrodes at the end of charging.
(4) Next, standing for 1 hour, the fourth electrode is connected in parallel with the negative electrode of the lithium ion battery to perform the 1C discharge with the positive electrode of the lithium-ion battery, wherein the discharge cut-off voltage is 2.9 V.
(5) The normal charge and discharge between the positive and negative electrodes of the lithium ion battery occur at the 301th - 499th turns.
(6) When the number of turns is 500, the negative and positive electrodes of the lithium ion battery are only charged; after the charging is finished, the third electrode and the fourth electrode are discharged at 0.05 A for 20 min.
(7) Next, standing for 1 hour, the fourth electrode is connected in parallel with the negative electrode of the lithium ion battery to perform the discharge with the positive electrode of the lithium-ion battery, wherein the discharge cut-off voltage is 2.8 V.
(8) The normal charge and discharge between the positive and negative electrodes of the lithium ion battery occur at the 501th - 699th turns.
(9) When the number of turns is 700, the negative and positive electrodes of the lithium ion battery are only charged; after the charging is finished, the third electrode and the fourth electrode are discharged at 0.05 A for 30 min.
(10) Next, standing for 1 hour, the fourth electrode is connected in parallel with the negative electrode of the lithium ion battery to perform the discharge with the positive electrode of the lithium-ion battery, wherein the discharge cut-off voltage is 2.7 V.
(11) The normal charge and discharge between the positive and negative electrodes of the lithium ion battery occur at the 701th - 999th turns.
(12) When the number of turns is 1000, the negative and positive electrodes of the lithium ion battery are only charged; after the charging is finished, the third electrode and the fourth electrode are discharged at 0.1 A for 20 min.
(13) Next, standing for 1 hour, the fourth electrode is connected in parallel with the negative electrode of the lithium ion battery to perform the discharge with the positive electrode of the lithium-ion battery, wherein the discharge cut-off voltage is 2.6 V.
(14) The normal charge and discharge between the positive and negative electrodes of the lithium ion battery occur at the 1001th - 1299th turns.
(15) When the number of turns is 1000, the negative and positive electrodes of the lithium ion battery are only charged; after the charging is finished, the third electrode and the fourth electrode are discharged at 1 A to 2.6 V.
(16) Next, standing for 1 hour, the fourth electrode is connected in parallel with the negative electrode of the lithium ion battery to perform the discharge with the positive electrode of the lithium-ion battery, wherein the discharge cut-off voltage is 2.5 V.
(17) The normal charge and discharge between the positive and negative electrodes of the lithium ion battery occur at the 1301th - 1499th turns.
(18) When the number of turns is 1500, the negative and positive electrodes of the lithium ion battery are only charged; after the charging is finished, the third electrode and the fourth electrode are discharged at 2 A to 2.5 V.
(19) Next, standing for 1 hour, the fourth electrode is connected in parallel with the negative electrode of the lithium ion battery to perform the discharge with the positive electrode of the lithium-ion battery, wherein the discharge cut-off voltage is 2.5 V.
(20) The normal charge and discharge between the positive and negative electrodes of the lithium ion battery occur at the 1501th - 2000th turns.
(21) When the 2000th turn is reached, the discharge is over, and the discharge capacity retention rate is calculated.

### Example II:

A lithium ion battery with a high capacity retention rate, the preparation method and charging and discharging methods therefor comprise the following steps:
(1) Providing a graphite negative electrode, a NC A positive electrode, and a separator of the lithium ion battery, and laminating them according to a conventional process.
(2) Providing a lithium foil with a thickness of 100 µm, which is roughened by using a stainless steel roller with a roughness of 500 meshes at a rolling pressure of 0.1 MPa as a third electrode; wet mixing 50% of activated carbon, 40% of hard carbon, 5% of P VDF, 4% of acetylene black, 1% of Li₂SO₄ and foam nickel, rolling and drying same to obtain a fourth electrode, laminating one layer of the third electrode and one layer of the fourth electrode on both sides of the above battery cell, respectively, with a separator therebetween for separation; the negative electrode tabs of the lithium ion battery are ultrasonically spot-welded together and led out from the outer tab, the positive electrode tabs of the lithium ion battery are ultrasonically spot-welded together and led out from the outer tab, two lithium metal electrodes on both sides are calendered and bonded, and led out from the outer tab, and two fourth electrodes are ultrasonically spot-welded together and led out from the outer tab to form a lithium ion battery battery cell with four electrodes. After electrolyte injection, and pre-sealing, top sealing, side sealing and secondary sealing with aluminum plastic films, a lithium ion battery battery cell 10 Ah is formed.
(3) After the conventional formation, 1C charge and discharge cycle test is started on the battery with a voltage from 4.2 V-3 V, when the number of turns is 300, the lithium ion battery is charged between the negative and positive electrodes only and discharged at 0.05 A for 10 min between the third and fourth electrodes at the end of charging.
(4) Next, standing for 1 hour, the fourth electrode is connected in parallel with the negative electrode of the lithium ion battery to perform the discharge with the positive electrode of the lithium-ion battery, wherein the discharge cut-off voltage is 2.9 V.
(5) The normal charge and discharge between the positive and negative electrodes of the lithium ion battery occur at the 301th - 499th turns.
(6) When the number of turns is 500, the negative and positive electrodes of the lithium ion battery are only charged; after the charging is finished, the third electrode and the fourth electrode are discharged at 0.05 A for 20 min.
(7) Next, standing for 1 hour, the fourth electrode is connected in parallel with the negative electrode of the lithium ion battery to perform the discharge with the positive electrode of the lithium-ion battery, wherein the discharge cut-off voltage is 2.8 V.
(8) The normal charge and discharge between the positive and negative electrodes of the lithium ion battery occur at the 501th - 699th turns.
(9) When the number of turns is 700, the negative and positive electrodes of the lithium ion battery are only charged; after the charging is finished, the third electrode and the fourth electrode are discharged at 0.05 A for 30 min.
(10) Next, standing for 1 hour, the fourth electrode is connected in parallel with the negative electrode of the lithium ion battery to perform the discharge with the positive electrode of the lithium-ion battery, wherein the discharge cut-off voltage is 2.7 V.
(11) The normal charge and discharge between the positive and negative electrodes of the lithium ion battery occur at the 701th - 999th turns.
(12) When the number of turns is 1000, the negative and positive electrodes of the lithium ion battery are only charged; after the charging is finished, the third electrode and the fourth electrode are discharged at 0.1 A for 20 min.
(13) Next, standing for 1 hour, the fourth electrode is connected in parallel with the negative electrode of the lithium ion battery to perform the discharge with the positive electrode of the lithium-ion battery, wherein the discharge cut-off voltage is 2.6 V.
(14) The normal charge and discharge between the positive and negative electrodes of the lithium ion battery occur at the 1001th - 1299th turns.
(15) When the number of turns is 1000, the negative and positive electrodes of the lithium ion battery are only charged; after the charging is finished, the third electrode and the fourth electrode are discharged at 1 A to 2.6 V.
(16) Next, standing for 1 hour, the fourth electrode is connected in parallel with the negative electrode of the lithium ion battery to perform the discharge with the positive electrode of the lithium-ion battery, wherein the discharge cut-off voltage is 2.5 V.
(17) The normal charge and discharge between the positive and negative electrodes of the lithium ion battery occur at the 1301th - 1499th turns.
(18) When the number of turns is 1500, the negative and positive electrodes of the lithium ion battery are only charged; after the charging is finished, the third electrode and the fourth electrode are discharged at 2 A to 2.5 V.
(19) Next, standing for 1 hour, the fourth electrode is connected in parallel with the negative electrode of the lithium ion battery to perform the discharge with the positive electrode of the lithium-ion battery, wherein the discharge cut-off voltage is 2.5 V.
(20) The normal charge and discharge between the positive and negative electrodes of the lithium ion battery occur at the 1501th - 2000th turns.
(21) When the 2000th turn is reached, the discharge is over, and the discharge capacity retention rate is calculated.

### Example III:

A lithium ion battery with a high capacity retention rate, the preparation method and charging and discharging methods therefor comprise the following steps:
(1) Providing a silicon carbon negative electrode, a NCM523 positive electrode, and a separator of the lithium ion battery, and laminating them according to a conventional process.
(2) Providing a lithium foil with a thickness of 200 µm, which is roughened by using a stainless steel roller with a roughness of 300 meshes at a rolling pressure of 1 MPa as a third electrode; wet mixing 35% of activated carbon, 55% of hard carbon, 5% of P VDF, 4% of acetylene black, 1% of Li₂SO₄ and foam nickel, rolling and drying same to obtain a fourth electrode, laminating two layers of the lithium foil and two layers of the activated carbon electrode at the center of the above battery cell, respectively, with a separator therebetween for separation; the negative electrode tabs of the lithium ion battery are ultrasonically spot-welded together and led out from the outer tab, the positive electrode tabs of the lithium ion battery are ultrasonically spot-welded together and led out from the outer tab, two lithium metal electrodes on both sides are calendered and bonded and led out from the outer tab, and two fourth electrodes are ultrasonically spot-welded together and led out from the outer tab to form a lithium ion battery battery cell with four electrodes. After electrolyte injection, and pre-sealing, top sealing, side sealing and secondary sealing with aluminum plastic films, a lithium ion battery battery cell 40 Ah is formed.
(3) After the conventional formation, 1C charge and discharge cycle test is started on the battery with a voltage from 4.2 V-3 V, when the number of turns is 300, the lithium ion battery is charged between the negative and positive electrodes only and discharged at 2 A to 2.9 V between the third and fourth electrodes at the end of charging.
(4) Next, standing for 1 hour, the fourth electrode is connected in parallel with the negative electrode of the lithium ion battery to perform the discharge with the positive electrode of the lithium-ion battery, wherein the discharge cut-off voltage is 2.8 V.
(5) The normal charge and discharge between the positive and negative electrodes of the lithium ion battery occur at the 301th - 499th turns.
(6) When the number of turns is 500, the negative and positive electrodes of the lithium ion battery are only charged; after the charging is finished, the third electrode and the fourth electrode are discharged at 2 A to 2.8 V.
(7) Next, standing for 1 hour, the fourth electrode is connected in parallel with the negative electrode of the lithium ion battery to perform the discharge with the positive electrode of the lithium-ion battery, wherein the discharge cut-off voltage is 2.7 V.
(8) The normal charge and discharge between the positive and negative electrodes of the lithium ion battery occur at the 501th - 699th turns.
(9) When the number of turns is 700, the negative and positive electrodes of the lithium ion battery are only charged; after the charging is finished, the third electrode and the fourth electrode are discharged at 2 A to 2.7 V.
(10) Next, standing for 1 hour, the fourth electrode is connected in parallel with the negative electrode of the lithium ion battery to perform the discharge with the positive electrode of the lithium-ion battery, wherein the discharge cut-off voltage is 2.6 V.
(11) The normal charge and discharge between the positive and negative electrodes of the lithium ion battery occur at the 701th - 999th turns.
(12) When the number of turns is 1000, the negative and positive electrodes of the lithium ion battery are only charged; after the charging is finished, the third electrode and the fourth electrode are discharged at 2 A to 2.6 V.
(13) Next, standing for 1 hour, the fourth electrode is connected in parallel with the negative electrode of the lithium ion battery to perform the discharge with the positive electrode of the lithium-ion battery, wherein the discharge cut-off voltage is 2.55 V.
(14) The normal charge and discharge between the positive and negative electrodes of the lithium ion battery occur at the 1001th - 1449th turns.
(15) When the number of turns is 1500, the negative and positive electrodes of the lithium ion battery are only charged; after the charging is finished, the third electrode and the fourth electrode are discharged at 2 A to 2.6 V.
(16) Next, standing for 1 hour, the fourth electrode is connected in parallel with the negative electrode of the lithium ion battery to perform the discharge with the positive electrode of the lithium-ion battery, wherein the discharge cut-off voltage is 2.5 V.
(17) The normal charge and discharge between the positive and negative electrodes of the lithium ion battery occur at the 1501th - 1799th turns.
(18) When the number of turns is 1800, the negative and positive electrodes of the lithium ion battery are only charged; after the charging is finished, the third electrode and the fourth electrode are discharged at 2 A to 2.5 V.
(19) Next, standing for 1 hour, the fourth electrode is connected in parallel with the negative electrode of the lithium ion battery to perform the discharge with the positive electrode of the lithium-ion battery, wherein the discharge cut-off voltage is 2.5 V.
(20) The 1801th - 2000th turns are the normal charge and discharge between the positive and negative electrodes of the lithium ion battery, and when the 2000th turn is reached, the discharge is over, and the discharge capacity retention rate is calculated.

### Example IV:

A lithium ion battery with a high capacity retention rate, the preparation method and charging and discharging methods therefor comprise the following steps:
(1) Providing a graphite negative electrode, a LiFePO₄ positive electrode, and a separator of the lithium ion battery, and winding them according to a conventional process.
(2) Providing a lithium foil with a thickness of 200 µm, which is roughened by using a stainless steel roller with a roughness of 200 meshes as a third electrode; wet mixing 50% of activated carbon, 40% of hard carbon, 5% of P VDF, 4% of acetylene black, 1% of Li₂SO₄ and stainless steel mesh, rolling and drying same to obtain a fourth electrode, winding one layer of the lithium foil and one layer of the activated carbon electrode outside the above battery cell, with a separator therebetween for separation; the negative electrode tabs of the lithium ion battery are ultrasonically spot-welded and led out from the outer tab, the positive electrode tabs of the lithium ion battery are ultrasonically spot-welded and led out from the outer tab, a single layer of lithium metal electrode is calendered and bonded, and led out from the outer tab, and a single layer of the fourth electrode is ultrasonically spot-welded and led out from the outer tab to form a lithium ion battery battery cell with four electrodes. Placing the lithium ion battery into an aluminum shell, injecting an electrolyte, and sealing same to form a lithium ion battery battery cell 20 Ah.
(3) After the conventional formation, 1C charge and discharge cycle test is started on the battery with a voltage from 3.9 V to 2.5 V, when the number of turns is 500, the lithium ion battery is charged between the negative and positive electrodes only and discharged at 0.5 A for 1 min between the third and fourth electrodes at the end of charging.
(4) Next, standing for 1 hour, the fourth electrode is connected in parallel with the negative electrode of the lithium ion battery to perform the discharge with the positive electrode of the lithium-ion battery, wherein the discharge cut-off voltage is 2.9 V.
(5) The normal charge and discharge between the positive and negative electrodes of the lithium ion battery occur at the 501th - 999th turns.
(6) When the number of turns is 1000, the negative and positive electrodes of the lithium ion battery are only charged; after the charging is finished, the third electrode and the fourth electrode are discharged at 0.5 A for 5 min.
(7) Next, standing for 1 hour, the fourth electrode is connected in parallel with the negative electrode of the lithium ion battery to perform the discharge with the positive electrode of the lithium-ion battery, wherein the discharge cut-off voltage is 2.85 V.
(8) The normal charge and discharge between the positive and negative electrodes of the lithium ion battery occur at the 1001th - 1499th turns.
(9) When the number of turns is 1500, the negative and positive electrodes of the lithium ion battery are only charged; after the charging is finished, the third electrode and the fourth electrode are discharged at 0.05 A for 10 min.
(10) Next, standing for 1 hour, the fourth electrode is connected in parallel with the negative electrode of the lithium ion battery to perform the discharge with the positive electrode of the lithium-ion battery, wherein the discharge cut-off voltage is 2.8 V.
(11) The normal charge and discharge between the positive and negative electrodes of the lithium ion battery occur at the 1501th - 1999th turns.
(12) When the number of turns is 2000, the negative and positive electrodes of the lithium ion battery are only charged; after the charging is finished, the third electrode and the fourth electrode are discharged at 0.5 A for 15 min.
(13) Next, standing for 1 hour, the fourth electrode is connected in parallel with the negative electrode of the lithium ion battery to perform the discharge with the positive electrode of the lithium-ion battery, wherein the discharge cut-off voltage is 2.75 V.
(14) The normal charge and discharge between the positive and negative electrodes of the lithium ion battery occur at the 2001th - 2499th turns.
(15) When the number of turns is 2500, the negative and positive electrodes of the lithium ion battery are only charged; after the charging is finished, the third electrode and the fourth electrode are discharged at 0.5 A for 20 min.
(16) Next, standing for 1 hour, the fourth electrode is connected in parallel with the negative electrode of the lithium ion battery to perform the discharge with the positive electrode of the lithium-ion battery, wherein the discharge cut-off voltage is 2.7 V.
(17) The normal charge and discharge between the positive and negative electrodes of the lithium ion battery occur at the 2501th - 2999th turns.
(18) When the number of turns is 3000, the negative and positive electrodes of the lithium ion battery are only charged; after the charging is finished, the third electrode and the fourth electrode are discharged at 0.5 A for 25 min.
(19) Next, standing for 1 hour, the fourth electrode is connected in parallel with the negative electrode of the lithium ion battery to perform the discharge with the positive electrode of the lithium-ion battery, wherein the discharge cut-off voltage is 2.65 V.
(20) the normal charge and discharge between the positive and negative electrodes of the lithium ion battery occur at the 3001th - 3499th turns.
(21) When the 3500th turn is reached, the discharge is over, and the discharge capacity retention rate is calculated.

### Example V:

A lithium ion battery with a high capacity retention rate, the preparation method and charging and discharging methods therefor comprise the following steps:
(1) Providing a silicon carbon negative electrode, a LiMnO₂ positive electrode, and a separator of the lithium ion battery, and winding them according to a conventional process.
(2) Providing a lithium foil with a thickness of 500 µm, which is roughened by using a stainless steel roller with a roughness of 300 meshes at a rolling pressure of 10 MPa as a third electrode; wet mixing 35% of activated carbon, 55% of hard carbon, 5% of P VDF, 4% of acetylene black, 1% of Li₂SO₄ and foam nickel, rolling and drying same to obtain a fourth electrode. Before winding the silicon carbon negative electrode and LiMnO₂ positive electrode, the lithium metal negative electrode and the activated carbon electrode are wound at the center for two turns, with a separator therebetween for separation; the negative electrode tabs of the lithium ion battery are ultrasonically spot-welded and led out from the outer tab, the positive electrode tabs of the lithium ion battery are ultrasonically spot-welded and led out from the outer tab, a single layer of lithium metal electrode is calendered and bonded, and led out from the outer tab, and a single layer of the fourth electrode is ultrasonically spot-welded and led out from the outer tab to form a lithium ion battery battery cell with four electrodes. Placing the lithium ion battery into an aluminum shell, injecting an electrolyte, and sealing same to form a lithium ion battery battery cell 30 Ah.
(3) After the conventional formation, 1C charge and discharge cycle test is started on the battery with a voltage from 4.2 V-3 V, when the number of turns is 500, the lithium ion battery is charged between the negative and positive electrodes only and discharged at 0.5 A to a voltage of 3.0 V between the third and fourth electrodes at the end of charging.
(4) Next, standing for 1 hour, the fourth electrode is connected in parallel with the negative electrode of the lithium ion battery to perform the discharge with the positive electrode of the lithium-ion battery, wherein the discharge cut-off voltage is 2.9 V.
(5) The normal charge and discharge between the positive and negative electrodes of the lithium ion battery occur at the 501th - 999th turns.
(6) When the number of turns is 1000, the negative and positive electrodes of the lithium ion battery are only charged; after the charging is finished, the third electrode and the fourth electrode are discharged at 0.5 A to 2.9 V of the cut-off voltage.
(7) Next, standing for 1 hour, the fourth electrode is connected in parallel with the negative electrode of the lithium ion battery to perform the discharge with the positive electrode of the lithium-ion battery, wherein the discharge cut-off voltage is 2.8 V.
(8) The normal charge and discharge between the positive and negative electrodes of the lithium ion battery occur at the 1001th - 1299th turns.
(9) When the number of turns is 1300, the negative and positive electrodes of the lithium ion battery are only charged; after the charging is finished, the third electrode and the fourth electrode are discharged at 0.5 A to 2.8 V of the cut-off voltage.
(10) Next, standing for 1 hour, the fourth electrode is connected in parallel with the negative electrode of the lithium ion battery to perform the discharge with the positive electrode of the lithium-ion battery, wherein the discharge cut-off voltage is 2.7 V.
(11) The normal charge and discharge between the positive and negative electrodes of the lithium ion battery occur at the 1301th - 1499th turns.
(12) When the number of turns is 1500, the negative and positive electrodes of the lithium ion battery are only charged; after the charging is finished, the third electrode and the fourth electrode are discharged at 0.5 A to 2.7 V of the cut-off voltage.
(13) Next, standing for 1 hour, the fourth electrode is connected in parallel with the negative electrode of the lithium ion battery to perform the discharge with the positive electrode of the lithium-ion battery, wherein the discharge cut-off voltage is 2.6 V.
(14) The normal charge and discharge between the positive and negative electrodes of the lithium ion battery occur at the 1501th - 1799th turns.
(15) When the number of turns is 1800, the negative and positive electrodes of the lithium ion battery are only charged; after the charging is finished, the third electrode and the fourth electrode are discharged at 1 A to 2.6 V.
(16) Next, standing for 1 hour, the fourth electrode is connected in parallel with the negative electrode of the lithium ion battery to perform the discharge with the positive electrode of the lithium-ion battery, wherein the discharge cut-off voltage is 2.5 V.
(17) The normal charge and discharge between the positive and negative electrodes of the lithium ion battery occur at the 1801th - 1999th turns.
(18) When the number of turns is 2000, the negative and positive electrodes of the lithium ion battery are only charged; after the charging is finished, the third electrode and the fourth electrode are discharged at 2 A to 2.5 V.
(19) Next, standing for 1 hour, the fourth electrode is connected in parallel with the negative electrode of the lithium ion battery to perform the discharge with the positive electrode of the lithium-ion battery, wherein the discharge cut-off voltage is 2.45 V.
(20) The normal charge and discharge between the positive and negative electrodes of the lithium ion battery occur at the 2001th - 2499th turns.
(21) When the number of turns is 2500, the negative and positive electrodes of the lithium ion battery are only charged; after the charging is finished, the third electrode and the fourth electrode are discharged at 2 A to 2.4 V.
(22) Next, standing for 1 hour, the fourth electrode is connected in parallel with the negative electrode of the lithium ion battery to perform the discharge with the positive electrode of the lithium-ion battery, wherein the discharge cut-off voltage is 2.3 V.
(23) The 2501th - 3000th turns are the normal charge and discharge between the positive and negative electrodes of the lithium ion battery, and when the 3000th turn is reached, the discharge is over, and the discharge capacity retention rate is calculated.

### Comparative example I:

A lithium ion battery, the preparation method and charging and discharging methods therefor are as follows:
(1) Providing a graphite negative electrode, a NCM111 positive electrode, and a separator of the lithium ion battery, and laminating them according to a conventional process.
(2) After electrolyte injection, and pre-sealing, top sealing, side sealing and secondary sealing with aluminum plastic films, a lithium ion battery battery cell 10 Ah is formed.
(3) After the conventional formation, 1C charge and discharge cycle test is started on the battery with a voltage from 4.2 V-3 V. After 2000 cycles, the capacity retention rate of the lithium ion battery is calculated.

### Comparative example II:

A lithium ion battery, the preparation method and charging and discharging methods therefor are as follows:
(1) Providing a graphite negative electrode, a NC A positive electrode, and a separator of the lithium ion battery, and laminating them according to a conventional process.
(2) After electrolyte injection, and pre-sealing, top sealing, side sealing and secondary sealing with aluminum plastic films, a lithium ion battery battery cell 10 Ah is formed.
(3) After the conventional formation, 1C charge and discharge cycle test is started on the battery with a voltage from 4.2 V-3 V. After 2000 cycles, the capacity retention rate of the lithium ion battery is calculated.

### Comparative example III:

A lithium ion battery, the preparation method and charging and discharging methods therefor are as follows:
(1) Providing a silicon carbon negative electrode, a NCM523 positive electrode, and a separator of the lithium ion battery, and laminating them according to a conventional process.
(2) After electrolyte injection, and pre-sealing, top sealing, side sealing and secondary sealing with aluminum plastic films, a lithium ion battery battery cell 40 Ah is formed.
(3) After the conventional formation, 1C charge and discharge cycle test is started on the battery with a voltage from 4.2 V-3 V. After 2000 cycles, the capacity retention rate of the lithium ion battery is calculated.

### Comparative example IV:

A lithium ion battery, the preparation method and charging and discharging methods therefor are as follows:
(1) Providing a graphite negative electrode, a LiFePO₄ positive electrode, and a separator of the lithium ion battery, and winding them according to a conventional process.
(2) Placing the lithium ion battery into an aluminum shell, injecting an electrolyte, and sealing same to form a lithium ion battery battery cell 20 Ah.
(3) After the conventional formation, 1C charge and discharge cycle test is started on the battery with a voltage from 3.9 V-2.5 V. After 3500 cycles, the capacity retention rate of the lithium ion battery is calculated.

### Comparative example V:

A lithium ion battery, the preparation method and charging and discharging methods therefor are as follows:
(1) Providing a silicon carbon negative electrode, a LiMnO₂ positive electrode, and a separator of the lithium ion battery, and winding them according to a conventional process.
(2) Placing the lithium ion battery into an aluminum shell, injecting an electrolyte, and sealing same to form a lithium ion battery battery cell 30 Ah.
(3) After the conventional formation, 1C charge and discharge cycle test is started on the battery with a voltage from 4.2 V-3 V. After 3000 cycles, the capacity retention rate of the lithium ion battery is calculated.

Test method: the discharge capacity at the 3000th turn is divided by the discharge capacity of the first turn, and the instrument adopts the MEWARE charging and discharging cabinet.

Test results:

| Sample | Capacity retention rate (%) |
|---|---|
| Example I | 94 |
| Example II | 92 |
| Example III | 93 |
| Example IV | 97 |
| Example V | 93 |
| Comparative example I | 80 |
| Comparative example II | 75 |
| Comparative example III | 65 |
| Comparative example IV | 85 |
| Comparative example V | 70 |

It can be seen from the above table that the capacity retention rates of the lithium ion batteries of the present application after a long cycle are all more than 90%, which is greater than that of the samples of the comparative examples, thus solving the problem of irreversible attenuation in the prior art.

## Claims

1. Lithium ion battery with a high capacity retention rate comprising a positive electrode plate, a negative electrode plate, separators arranged between the positive electrode plate and the negative electrode plate, and an electrolyte, **characterized in that**: the lithium ion battery further comprises a third electrode and a fourth electrode, which are independent of each other and provided between the positive electrode plate and the negative electrode plate, wherein the third electrode and the fourth electrode are separated by means of a single-layer separator, a metal lithium electrode being used as the third electrode, and an activated carbon electrode being used as the fourth electrode.

2. Lithium ion battery with a high capacity retention rate according to claim 1, **characterized in that**: the third electrode is preferably a lithium foil or a lithium alloy foil with a thickness of 100-500 µm.

3. Lithium ion battery with a high capacity retention rate according to claim 2, **characterized in that**: the lithium foil or lithium alloy foil is roughened by means of pre-rolling, and the pre-rolling is preformed by using a stainless steel roller with grid raised points, wherein the rolling pressure is 0.1-10 MPa.

4. The lithium ion battery with a high capacity retention rate according to claim 1, **characterized in that**: the fourth electrode comprises the following components in percentage by weight: 35-55% of activated carbon, 40-55% of hard carbon, 5% of a binder, 4% of a conductive agent, 1% of a pore former, combined with a porous current collector.

5. Lithium ion battery with a high capacity retention rate according to claim 1, **characterized in that**: the number of layers of the third electrode and the fourth electrode is 1-4.

6. Lithium ion battery with a high capacity retention rate according to any one of claims 1-5, **characterized in that** the lithium ion battery is prepared by the following steps:
(1) the positive electrode plate, the negative electrode plate, and the separator are wound or laminated according to a conventional process to form a battery cell structure;
(2) the third electrode and the fourth electrode are wound or laminated inside or outside the above-mentioned battery cell structure, and the third electrode and the fourth electrode are separated by means of a single-layer separator; and
(3) the electrolyte is injected according to conventional subsequent steps, and sealed to form the lithium ion battery.

7. Charging and discharging method of the lithium ion battery with a high capacity retention rate according to any one of claims 1-5, **characterized in that** the method comprises a turn operation referring to a cycle including:
a) the charging of the negative and positive electrodes, and discharging of the third electrode and four electrode; or
b) the charging of the negative and positive electrodes, and discharging of the negative and positive electrodes
and wherein the method comprises the following steps:
(1) when the number of turns is n, the negative and positive electrodes of the lithium ion battery are only charged; after the charging is finished, the third electrode and the fourth electrode are discharged with controlled current;
(2) after standing for 1 hour, the fourth electrode is connected in parallel with the negative electrode of the lithium ion battery to perform the discharge with the positive electrode of the lithium-ion battery;
(3) upon completion of the n turns, the normal charge and discharge between the positive and negative electrodes of the lithium ion battery occur at the (n+1) th and subsequent turns;
(4) the normal charge and discharge are continued until the next fixed number of turns or conditional number of turns, and steps (1) to (4) are repeated; and
(5) when the number of cycles reaches the specified number of turns, the charging and discharging methods are finished;
wherein the number of turns n may be a fixed number of turns or a conditional number of turns, and the fixed number of turns is preferably 300, 500, 700, 1000, 1300, 1500, 1800, 2000, 2500, 3000, 3500, 4000, 4500, or 5000.

8. Charging and discharging method of the lithium ion battery with a high capacity retention rate according to claim 7, **characterized in that**: in the step (1), the third electrode and the fourth electrode are discharged, preferably at a discharge current of 0.05 A-2 A, the preferred discharge cut-off condition is discharge voltage or discharge time, wherein the preferred discharge cut-off voltage is 2.3-2.9 V and the discharge cut-off time is 1 min-30 min.

9. Charging and discharging method of the lithium ion battery with a high capacity retention rate according to claim 7, **characterized in that**: in the step (2), the fourth electrode is connected in parallel with the negative electrode of the lithium ion battery to perform the discharge with the positive electrode of the lithium-ion battery, wherein the discharge cut-off voltage is 2.3-2.9 V.

## Patentansprüche

1. Lithium-Ionen-Batterie mit einer hohen Kapazitätsretentionsrate, umfassend eine positive Elektrodenplatte, eine negative Elektrodenplatte, zwischen der positiven Elektrodenplatte und der negativen Elektrodenplatte angeordnete Separatoren und einen Elektrolyten, **dadurch gekennzeichnet, dass**: die Lithium-Ionen-Batterie ferner eine dritte Elektrode und eine vierte Elektrode umfasst, die voneinander unabhängig sind und zwischen der positiven Elektrodenplatte und der negativen Elektrodenplatte bereitgestellt werden, wobei die dritte Elektrode und die vierte Elektrode mittels eines einschichtigen Separators getrennt sind, wobei eine Metall-Lithiumelektrode als dritte Elektrode verwendet wird und eine Aktivkohleelektrode als vierte Elektrode verwendet wird.

2. Lithium-Ionen-Batterie mit einer hohen Kapazitätsretentionsrate nach Anspruch 1, **dadurch gekennzeichnet, dass**: die dritte Elektrode vorzugsweise eine Lithiumfolie oder eine Lithiumlegierungsfolie mit einer Dicke von 100-500 µm ist.

3. Lithium-Ionen-Batterie mit einer hohen Kapazitätsretentionsrate nach Anspruch 2, **dadurch gekennzeichnet, dass**: die Lithiumfolie oder Lithiumlegierungsfolie mittels Vorwalzen aufgeraut wird, und das Vorwalzen durch Verwendung einer Edelstahlwalze mit Rastererhöhungspunkten vorgeformt wird, wobei der Walzdruck 0,1-10 MPa beträgt.

4. Lithium-Ionen-Batterie mit einer hohen Kapazitätsretentionsrate nach Anspruch 1, **dadurch gekennzeichnet, dass**: die vierte Elektrode folgende Komponenten in Gewichtsprozent umfasst: 35-55 % Aktivkohle, 40-55 % Hartkohle, 5 % Bindemittel, 4 % Leitmittel, 1 % Porenbildner, kombiniert mit einem porösen Stromabnehmer.

5. Lithium-Ionen-Batterie mit einer hohen Kapazitätsretentionsrate nach Anspruch 1, **dadurch gekennzeichnet, dass**: die Anzahl der Schichten der dritten Elektrode und der vierten Elektrode 1-4 beträgt.

6. Lithium-Ionen-Batterie mit einer hohen Kapazitätsretentionsrate nach einem der Ansprüche 1 bis 5, **dadurch gekennzeichnet, dass** die Lithium-Ionen-Batterie durch folgende Schritte vorbereitet wird:
(1) Wickeln oder Laminieren der positiven Elektrodenplatte, der negativen Elektrodenplatte und des Separators nach einem konventionellen Verfahren zum Bilden einer Batteriezellenstruktur;
(2) Wickeln oder Laminieren der dritten Elektrode und der vierten Elektrode innerhalb oder außerhalb der vorgenannten Batteriezellenstruktur, und die dritte Elektrode und die vierte Elektrode sind mittels eines einschichtigen Separators getrennt; und
(3) Einspritzen des Elektrolyts nach den konventionellen nachfolgenden Schritten, und Versiegeln zum Bilden der Lithium-Ionen-Batterie.

7. Lade- und Entladeverfahren der Lithium-Ionen-Batterie mit einer hohen Kapazitätsretentionsrate nach einem der Ansprüche 1 bis 5, **dadurch gekennzeichnet, dass** das Verfahren einen Wendevorgang umfasst, der sich auf einen Zyklus bezieht, der Folgendes enthält:
a) das Laden der negativen und positiven Elektroden und das Entladen der dritten Elektrode und der vier Elektroden; oder
b) das Laden der negativen und positiven Elektroden und Entladen der negativen und positiven Elektroden, wobei das Verfahren die folgenden Schritte umfasst:
(1) wenn die Anzahl der Umdrehungen n beträgt, werden die negativen und positiven Elektroden der Lithium-Ionen-Batterie nur geladen; nach Beendigung des Ladevorgangs werden die dritte Elektrode und die vierte Elektrode mit Regelstrom entladen;
(2) nach 1 Stunde Standzeit wird die vierte Elektrode parallel mit der negativen Elektrode der Lithium-Ionen-Batterie verbunden, um das Entladen mit der positiven Elektrode der Lithium-Ionen-Batterie durchzuführen;
(3) nach Abschluss der n Umdrehungen erfolgt das normale Laden und Entladen zwischen den positiven und negativen Elektroden der Lithium-Ionen-Batterie bei der (n+1)ten und den folgenden Umdrehungen;
(4) das normale Laden und Entladen werden bis zu der nächsten festen Anzahl von Umdrehungen oder bedingten Anzahl von Umdrehungen fortgesetzt und die Schritte (1) bis (4) wiederholt; und
(5) wenn die Anzahl der Zyklen die angegebene Anzahl von Umdrehungen erreicht, sind die Lade- und Entladeverfahren abgeschlossen;
wobei die Anzahl der Umdrehungen n eine feste Anzahl von Umdrehungen oder eine bedingte Anzahl von Umdrehungen sein kann, und die feste Anzahl von Umdrehungen vorzugsweise 300, 500, 700, 1000, 1300, 1500, 1800, 2000, 2500, 3000, 3500, 4000, 4500 oder 5000 ist.

8. Lade- und Entladeverfahren der Lithium-Ionen-Batterie mit einer hohen Kapazitätsretentionsrate nach Anspruch 7, **dadurch gekennzeichnet, dass**: im Schritt (1) die dritte Elektrode und die vierte Elektrode entladen werden, vorzugsweise bei einem Entladestrom von 0,05 A-2 A, die bevorzugte Entladeunterbrechungsbedingung die Entladungsspannung oder die Entladezeit ist, wobei die bevorzugte Entladeabschaltspannung 2,3-2,9 V und die Entladeabschaltzeit 1 min-30 min beträgt.

9. Lade- und Entladeverfahren der Lithium-Ionen-Batterie mit einer hohen Kapazitätsretentionsrate nach Anspruch 7, **dadurch gekennzeichnet, dass**: im Schritt (2) die vierte Elektrode parallel mit der negativen Elektrode der Lithium-Ionen-Batterie verbunden ist, um das Entladen mit der positiven Elektrode der Lithium-Ionen-Batterie durchzuführen, wobei die Entladeabschaltspannung 2,3-2,9 V beträgt.

## Revendications

1. Batterie lithium-ion à taux de rétention de capacité élevé comportant une plaque d'électrode positive, une plaque d'électrode négative, des séparateurs agencés entre la plaque d'électrode positive et la plaque d'électrode négative, et un électrolyte, **caractérisée en ce que** : la batterie lithium-ion comporte en outre une troisième électrode et une quatrième électrode, qui sont indépendantes l'une de l'autre et disposées entre la plaque d'électrode positive et la plaque d'électrode négative, dans laquelle la troisième électrode et la quatrième électrode sont séparées au moyen d'un séparateur monocouche, une électrode au lithium métallique étant utilisée comme troisième électrode et une électrode au charbon actif étant utilisée comme quatrième électrode.

2. Batterie lithium-ion à taux de rétention de capacité élevé selon la revendication 1, **caractérisée en ce que** : la troisième électrode est de préférence une feuille de lithium ou une feuille d'alliage de lithium d'une épaisseur de 100 à 500 µm.

3. Batterie lithium-ion à taux de rétention de capacité élevé selon la revendication 2, **caractérisée en ce que** : la feuille de lithium ou la feuille d'alliage de lithium est rendue rugueuse au moyen d'un prélaminage, et le prélaminage est préformé à l'aide d'un rouleau en acier inoxydable avec des points en relief de grille, dans laquelle la pression de laminage est de 0,1 à 10 MPa.

4. Batterie lithium-ion à taux de rétention de capacité élevé selon la revendication 1, **caractérisée en ce que** : la quatrième électrode comporte les composants suivants en pourcentage en poids : 35 à 55 % de charbon actif, 40 à 55 % de carbone dur, 5 % d'un liant, 4 % d'un agent conducteur, 1 % d'un agent porogène, combinés avec un collecteur de courant poreux.

5. Batterie lithium-ion à taux de rétention de capacité élevé selon la revendication 1, **caractérisée en ce que** : le nombre de couches de la troisième électrode et de la quatrième électrode est de 1 à 4.

6. Batterie lithium-ion à taux de rétention de capacité élevé selon l'une quelconque des revendications 1 à 5, **caractérisée en ce que** la batterie lithium-ion est préparée par les étapes suivantes :
(1) la plaque d'électrode positive, la plaque d'électrode négative et le séparateur sont enroulés ou stratifiés selon un processus conventionnel pour former une structure d'éléments de batterie ;
(2) la troisième électrode et la quatrième électrode sont enroulées ou stratifiées à l'intérieur ou à l'extérieur de la structure d'éléments de batterie susmentionnée, et la troisième électrode et la quatrième électrode sont séparées au moyen d'un séparateur monocouche ; et
(3) l'électrolyte est injecté selon des étapes ultérieures conventionnelles et scellé pour former la batterie lithium-ion.

7. Procédé de charge et de décharge de la batterie lithium-ion à taux de rétention de capacité élevé selon l'une quelconque des revendications 1 à 5, **caractérisé en ce que** le procédé comporte une opération de rotation faisant référence à un cycle incluant :
a) la charge des électrodes négative et positive, et la décharge de la troisième électrode et de la quatrième électrode ; ou
b) la charge des électrodes négative et positive, et la décharge des électrodes négative et positive et dans lequel le procédé comporte les étapes suivantes :
(1) lorsque le nombre de tours est n, les électrodes négative et positive de la batterie lithium-ion sont seulement chargées ; une fois la charge terminée, la troisième électrode et la quatrième électrode sont déchargées avec un courant commandé ;
(2) après une attente d'une heure, la quatrième électrode est connectée en parallèle à l'électrode négative de la batterie lithium-ion pour réaliser la décharge avec l'électrode positive de la batterie lithium-ion
(3) une fois les n tours terminés, la charge et la décharge normales entre les électrodes positive et négative de la batterie lithium-ion se produisent au (n+1)ième tour et aux tours suivants ;
(4) la charge et la décharge normales se poursuivent jusqu'au prochain nombre fixe de tours ou nombre conditionnel de tours, et les étapes (1) à (4) sont répétées ; et
(5) lorsque le nombre de cycles atteint le nombre de tours spécifié, les procédés de charge et de décharge sont terminés ;
dans lequel le nombre de tours n peut être un nombre fixe de tours ou un nombre conditionnel de tours, et le nombre fixe de tours est de préférence 300, 500, 700, 1 000, 1 300, 1 500, 1 800, 2 000, 2 500, 3 000, 3 500, 4 000, 4 500 ou 5 000.

8. Procédé de charge et de décharge de la batterie lithium-ion à taux de rétention de capacité élevé selon la revendication 7, **caractérisé en ce que** : à l'étape (1), la troisième électrode et la quatrième électrode sont déchargées, de préférence à un courant de décharge de 0,05 A à 2 A, la condition de coupure de décharge préférée est une tension de décharge ou un temps de décharge, dans lequel la tension de coupure de décharge préférée est de 2,3 à 2,9 V et le temps de coupure de décharge est de 1 min à 30 min.

9. Procédé de charge et de décharge de la batterie lithium-ion à taux de rétention de capacité élevé selon la revendication 7, **caractérisé en ce que** : à l'étape (2), la quatrième électrode est connectée en parallèle à l'électrode négative de la batterie lithium-ion pour réaliser la décharge avec l'électrode positive de la batterie lithium-ion, dans lequel la tension de coupure de décharge est de 2,3 à 2,9 V.
